# EUROPÄISCHE PATENTSCHRIFT

(11) **EP 1 074 206 B1**
(45) Veröffentlichungstag und Bekanntmachung des Hinweises auf die Patenterteilung: **29.10.2003**
(21) Anmeldenummer: 99115421.2
(22) Anmeldetag: 04.08.1999
(51) Int. Cl.: A47J 31/06

(54) **Brühsieb**
Coffee filter
Filtre à café

(43) Veröffentlichungstag der Anmeldung: 07.02.2001
(73) Patentinhaber: WMF WÜRTTEMBERGISCHE METALLWARENFABRIK AG, 73309 Geislingen/Steige (DE)
(72) Erfinder: App, Manfred, 73312 Geislingen/Steige (DE); Arndt, Peter, 89134 Blaustein (DE); Grupp, Martin, 73550 Wissgoldingen (DE); Gussmann, Jochen, 73312 Geislingen/Steige (DE); Lustig, Wilfried, 73540 Heubach (DE); Riegert, Hermann, 89558 Treffelhausen (DE); Schützle, Bernd, 73344 Gruibingen (DE)
(74) Vertreter: Grünecker, Kinkeldey, Stockmair & Schwanhäusser Anwaltssozietät

(56) Entgegenhaltungen:
- US-A- 5 028 328
- US-A- 5 715 741
- US-A- 5 824 218
- US-A- 5 913 962

## Beschreibung

Die Erfindung bezieht sich auf ein Brühsieb für eine Kaffeemaschine der im Oberbegriff von Anspruch 1 erläuterten Art.

Insbesondere Kaffeemaschinen für Dauerbetrieb, wie beispielsweise automatisch arbeitende Kaffeemaschinen für Restaurants und Gaststätten, weisen eine durch ein Brühsieb begrenzte Brühkammer auf. Das Brühsieb ist als Dauerfilter ausgelegt und hat zwei einander entgegengesetzte Funktionen zu erfüllen. Zum einen muß es auch feinstgemahlenes Kaffeemehl sicher zurückhalten, zum anderen muß es das gebrühte Getränk in akzeptabler Zeit durchlaufen lassen. Darüber hinaus müssen Brühsiebe auch so stabil aufgebaut sein, daß sie zumindest dem Druck der eingefüllten Substanzen, sowie bei Brüheinrichtungen, die das Kaffeemehl auspressen oder die unter Druck arbeiten, auch diesem Druck standhalten müssen. Die früher verwendeten, einstückigen Brühsiebe waren meist nur in der Lage, zwei dieser Funktionen zu erfüllen; meistens waren sie stabil genug und ihre Lochgröße war klein genug, um Kaffeemehl zurückhalten zu können, durch die größere Durchflußlänge durch das Brühsieb, bedingt durch dessen der Stabilität dienenden Dicke, war jedoch die Durchlaufzeit zu lang. Man ist deshalb bereits seit Jahren dazu übergegangen, das Brühsieb aus einem Feinsieb und einem Stützsieb zusammenzusetzen, wobei das Feinsieb sehr dünn und feinporig ausgebildet ist und das Stützsieb demgegenüber gröber porig und wesentlich stabiler ist. Bislang hat man beide Siebe aus Metall gefertigt und miteinander zum Brühsieb verschweißt. Diese Ausgestaltung ist jedoch relativ aufwendig und erfordert eine sorgfältige Herstellung, um zu verhindern, daß durch die Verschweißung das relativ dünne Feinsieb beschädigt bzw. zu viele der feinen Sieböffnungen im Feinsieb geschlossen werden.

Ein Brühsieb für eine Kaffeemaschine gemäß dem Oberbegriff des Anspruches 1 ist aus der US-A-5 824 218 bekannt. Das bekannte Brühsieb enthält eine Filterscheibe und eine perforierte Scheibe, die in einem vorbestimmten Abstand zueinander angeordnet sind, der die Schaumbildung bei der Espressozubereitung verbessern soll. Beide Scheiben sind in einen sie umgebenden Rahmen eingegossen. Das Einbetten der Scheiben in den Rahmen geschieht dadurch, dass Kunststoff durch randseitige Ausnehmungen der Scheiben hindurchtritt und die jeweilige Scheibe am Rahmen verankert. Am umgebenden Gefäßkörper wird der Rahmen in gleicher Weise verankert, d.h. auch der Gefäßkörper ist mit Ausnehmungen versehen, durch die der Kunststoff des Rahmen fließen kann. Obwohl die beiden Scheiben im Abstand zueinander gehalten werden sollen, sind an der unteren Scheibe in einigen Ausführungsformen Vorsprünge angeformt, auf denen die oberen Scheibe aufliegt. Bei allen Ausführungsbeispielen steht jedoch der Rahmen durch die spezielle Art seiner Herstellung über die Oberfläche der oberen Scheibe vor.

Die US-A-5 913 962 beschreibt einen Filterträger für eine Espressomaschine deren Sieb aus einem Filtersieb und einem Stützsieb besteht. Filtersieb und Stützsieb sind durch einen Rahmen gehalten, in den das Filtersieb mit seinem Kantenbereich, bevorzugt durch Spritzgießen, eingebettet ist. Auch hier steht der Rahmen über die obere Oberfläche des Filtersiebes vor.

Der Erfindung liegt somit die Aufgabe zugrunde, ein Brühsieb bereitzustellen, das einfach und kostengünstig ohne Beeinträchtigung seiner Funktion herstellbar ist.

Die Aufgabe wird durch das im Anspruch 1 angegebene Brühsieb gelöst.

Durch die erfindungsgemäße Ausgestaltung wird ein einfach herzustellendes und kostengünstiges Brühsieb geschaffen, ohne dass die Gefahr besteht, dass die Funktion leidet. Durch die Abkröpfung im Randbereich des Feinsiebes wird im fertigen Brühsieb eine ebene, fluchtende Oberfläche auf derjenigen Seite des Brühsiebes geschaffen, die dem Kaffeemehl zugewandt ist. An dieser Oberfläche können sich somit weder Kaffeesatzpartikel festsetzen noch sind irgendwelche Kanten oder Vorsprünge vorhanden, an denen beispielsweise der Abstreifer, der den verbrauchten Kaffeesatz abstreift, hängen bleiben könnte.

Noch kostengünstiger wird die Herstellung, wenn gemäß Anspruch 2 das Stützsieb einstückig mit dem Rahmen aus Kunststoff gefertigt wird.

Zweckmäßigerweise wird gemäß Anspruch 3 das Feinsieb im Bereich des Rahmens in dem Stützsieb eingebettet

Die meisten Konstruktionen von Brüheinrichtungen erfordern eine Abdichtung des Umfanges des Brühsiebes, für die die Ausgestaltung nach Anspruch 4, d.h. die Ausbildung des umlaufenden Rahmens als Dichtrand zweckmäßig ist.

Anspruch 5 beschreibt einen besonders bevorzugten Kunststoff für das Stützsieb, der sowohl beständig gegen Heißwasser als auch gegen die zum Reinigen von Kaffeemaschinen verwendeten Reinigungschemikalien ist und außerdem die erforderliche konstruktive Festigkeit aufweist.

Ein weiteres, besonders vorteilhaftes Merkmal ist die leicht nach oben gewölbte Form gemäß Anspruch 6. Da das Stützsieb aus Kunststoff elastischer ist als das bisher dafür verwendete Material, und da das Feinsieb nach wie vor sehr dünn und folienartig ausgebildet ist, wird durch diese gewölbte Form erreicht, daß es sich beispielsweise unter Belastung flachlegt und dadurch in seinem Dicht- bzw. Auflagebereich noch fester gegen die Unterlage drückt, so daß insbesondere die Dichtwirkung noch verstärkt wird.

Anspruch 7 beschreibt ein besonders bevorzugtes Material für das Feinsieb, wobei als Feinsieb auch das bisher für Brühsiebe aus Metall verwendete Feinsieb eingesetzt werden kann.

Anspruch 8 beschreibt ein besonders bevorzugtes Herstellungsverfahren des Brühsiebes durch Anspritzen des Stützsiebes an das Feinsieb.

Ein Ausführungsbeispiel der Erfindung wird nachfolgend anhand der Zeichnungen näher erläutert. Es zeigen:
- Fig. 1: eine perspektivische Darstellung, teilweise geschnitten, eines erfindungsgemäßen Brühsiebes,
- Fig. 2: eine Seitenansicht des Schnittes gemäß Fig. 1, und
- Fig. 3: eine Draufsicht auf das Stützsieb gemäß Fig. 1.

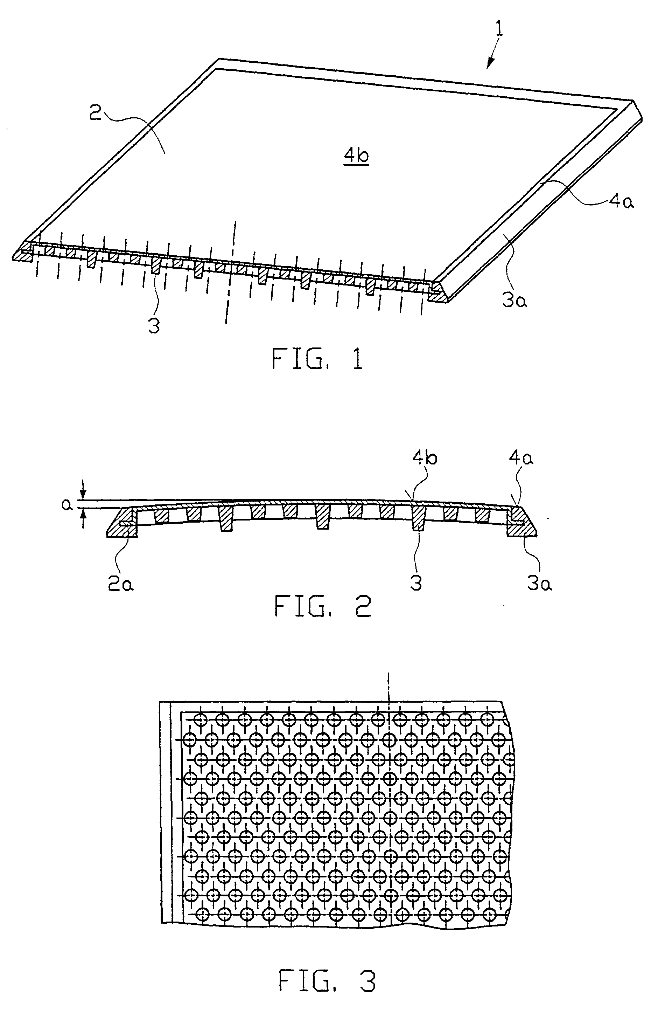

Fig. 1 zeigt eine perspektivische Darstellung eines Brühsiebes 1, das hier zur Verwendung in einer rechteckigen Brühkammer ausgebildet ist. Dieses Brühsieb kann jedoch alle erforderlichen Formen annehmen, kann beispielsweise rondenförmig, ringförmig oder trichterförmig sein. Das Brühsieb 1 enthält eines der üblichen Feinsiebe 2, das aus einer dünnen Metallfolie mit einer Dicke von wenigen Zehntelmillimeter und Sieböffnungen im Mikrometerbereich (nicht dargestellt), beispielsweise für normalen Filterkaffee zwischen 60 und 100 µm oder für Espresso zwischen 100 und 200 µm besteht. Das Feinsieb 2 bedeckt eine Oberfläche eines Stützsiebes 3 aus Kunststoff. Das Stützsieb 3 weist Sieböffnungen im Größenbereich von bis zu etwa 2 mm auf, wobei jedoch deren Form nicht auf die in Fig. 3 gezeigte Kreisform beschränkt ist. Das Stützsieb 3 kann vielmehr mit jeder geeigneten Form von Sieböffnungen versehen sein, beispielsweise kann das Stützsieb 3 als Gitter vorliegen oder mit sich kreuzenden Nuten versehen sein. Das Stützsieb 3 hat eine größere Dicke, so daß es im wesentlichen die gesamten im Betrieb auftretenden Kräfte aufnehmen kann. Bevorzugt besteht das Stützsieb 3 aus Polyphenylensulfid (PPS). Jeder andere, lebensmittelechte sowie gegen Heißwasser und Reinigungschemikalien beständige und ausreichend feste Kunststoff ist ebenfalls geeignet.

Das Brühsieb 1 wird entlang seines Randes in die Brühkammer eingebaut. Zu diesem Zweck ist am Stützsieb 3 ein umlaufender, als Dichtrand 3a ausgebildeter Rahmen aus dem gleichen Kunststoff angeformt. In diesem Dichtrand 3a ist ein abgekröpfter Randbereich 2a (Fig. 2) des Feinsiebes 2 derart eingebettet, daß die Oberseite 4a des Dichtrandes 3a und die Oberseite 4b des Feinsiebes 2 miteinander fluchten und beide Siebe 2, 3 dadurch miteinander zu einer Einheit verbunden werden. Das Brühsieb 1 wird mit Hilfe dieses Dichtrandes 3a in einer entsprechenden Ausnehmung der Brühkammer festgeklemmt, wobei die Elastizität des Kunststoffes des Dichtrandes 3a ausreicht, um die erforderliche Abdichtung zu bewirken.

Wie in Fig. 2 übertrieben dargestellt ist, sind Stützsieb 3 und Feinsieb 2 um den Betrag a leicht nach oben gewölbt, d.h. in Richtung des später auf dem Feinsieb 2 aufliegenden Kaffeemehls, wobei die Wölbung wenigstens einachsig, bevorzugt jedoch mehrachsig und symmetrisch ist. Der Betrag a beträgt weniger als 5 %, bevorzugt weniger als etwa 1 bis etwa 2 %, der größten Flächenabmessung des Brühsiebes 1 und bewirkt, daß bei jeder Belastung des Brühsiebes 1, die immer von der Feinsiebseite aus erfolgt, das Brühsieb 1 mit seinem Dichtrand 3a stärker auf die Auflage gedrückt wird, so daß die Dichtwirkung bei Belastung verbessert wird. Die Wölbung um den Betrag a kann nur am Stützsieb 3 angeformt sein, während die Metallfolie des Feinsiebes 2 dieser Wölbung durch Biegung angepaßt werden kann.

Das erfindungsgemäße Brühsieb wird bevorzugt hergestellt, indem man ein vorgefertigtes Feinsieb 2 aus Metall in eine Kunststoff-Spritzform einlegt und das Stützsieb 3 und den Rahmen 3a an das Feinsieb 2 anspritzt.

In Abwandlung des beschriebenen und gezeichneten Ausführungsbeispieles können beispielsweise Dichtelemente zusätzlich oder alternativ zum Rahmen an allen denjenigen Stellen vorgesehen werden, an denen das Brühsieb mit der Brüheinrichtung verbunden werden soll. Das Brühsieb kann auch flach, d.h. ohne Wölbung, ausgebildet sein. Die Herstellung muß nicht unbedingt durch Anspritzen erfolgen, obwohl dieses Herstellungsverfahren bevorzugt ist; so kann beispielsweise das Feinsieb zwischen zwei Kunststoffteile, beispielsweise einem losen Deckteil und einem am Stützsieb angeformten Rahmenteil, eingelegt und durch partielles Plastifizieren der beiden Kunststoffteile eingebettet werden. Weiterhin kann das Stützsieb aus einem anderen Material wie der Rahmen, z.B. einem anderen Kunststoff oder aus Metall, gefertigt sein.

## Patentansprüche

1. Brühsieb für eine Kaffeemaschine mit einem Stützsieb (3) und einem Feinsieb (2), wobei an das Stützsieb (3) und/oder das Feinsieb (2) ein Rahmen (3a) aus Kunststoff angeformt ist, durch den die Siebe (2, 3) miteinander verbunden sind, **dadurch gekennzeichnet, dass** das Feinsieb (2) eine Oberfläche des Stützsiebes (3) überdeckend angeordnet und mit einem abgekröpften Randbereich (2a) so in den Rahmen (3a) eingebettet ist, dass eine Oberfläche (4b) des Feinsiebes (2) mit der anliegenden Oberfläche (4a) des Rahmens (3a) fluchtend ausgerichtet ist.

2. Brühsieb nach Anspruch 1, **dadurch gekennzeichnet, dass** das Stützsieb (3) aus Kunststoff gefertigt und der Rahmen (3a) am Stützsieb (3) angeformt ist.

3. Brühsieb nach Anspruch 2, **dadurch gekennzeichnet, dass** das Feinsieb (2) in den Rahmen (3a) eingebettet ist..

4. Brühsieb nach einem der Ansprüche 1 bis 3, **dadurch gekennzeichnet, dass** der Rahmen als umlaufender Dichtrand (3a) ausgebildet ist.

5. Brühsieb nach einem der Ansprüche 1 bis 4, **dadurch gekennzeichnet, dass** das Stützsieb (3) aus PPS (Polyphenylensulfid) besteht.

6. Brühsieb nach einem der Ansprüche 1 bis 5, **dadurch gekennzeichnet, dass** das Stützsieb (3) geringfügig in Richtung auf das Feinsieb (2) gewölbt ist.

7. Brühsieb nach einem der Ansprüche 1 bis 6, **dadurch gekennzeichnet, dass** das Feinsieb (2) aus Metall besteht.

8. Verfahren zum Herstellen eines Brühsiebes (1) für eine Kaffeemaschine aus einem Feinsieb (2), einem Stützsieb (3) und einem Rahmen (3a), wobei das Feinsieb (2) mit einem abgekröpften Randbereich (2a) vorgefertigt, in eine Kunststoff-Spritzform eingelegt und das Stützsieb (3) mit dem Rahmen (3a) aus Kunststoff hergestellt und am Feinsieb (2) angespritzt wird.

## Claims

1. Filter for a coffee machine comprising a supporting sieve (3) and a fine sieve (2), a plastic frame (3a) being moulded on to the supporting sieve (3) and/or the fine sieve (2) and connecting the sieves (2, 3) together, **characterised in that** the fine sieve (2) is arranged in such a manner that it covers a surface of the supporting sieve (3) and is embedded in the frame (3a) by means of an edge region (2a) bent at an angle in such a manner that a surface (4b) of the fine sieve (2) is aligned with the adjacent surface (4a) of the frame (3a).

2. Filter according to claim 1, **characterised in that** the supporting sieve (3) is made of plastic and the frame (3a) is moulded on to the supporting sieve (3).

3. Filter according to claim 2, **characterised in that** the fine sieve (2) is embedded in the frame (3a).

4. Filter according to one of claims 1 to 3, **characterised in that** the frame is in the form of a circumferential sealing edge (3a).

5. Filter according to one of claims 1 to 4, **characterised in that** the supporting sieve (3) consists of PPS (polyphenylene sulphide).

6. Filter according to one of claims 1 to 5, **characterised in that** the supporting sieve (3) is curved slightly in the direction of the fine sieve (2).

7. Filter according to one of claims 1 to 6, **characterised in that** the fine sieve (2) consists of metal.

8. Process for the production of a filter (1) for a coffee machine consisting of a fine sieve (2), a supporting sieve (3) and a frame (3a), the fine sieve (2) being prefabricated with an edge region (2a) bent at an angle and being inserted into a plastics injection mould and the supporting sieve (3) with the frame (3a) being made of plastic and injection moulded on to the fine sieve (2).

## Revendications

1. Filtre de percolation pour machine à café ayant un filtre support (3) et un filtre fin (2), dans lequel sur le filtre support (3) et/ou le filtre fin (2) est moulé un cadre (3a) de matière plastique à l'aide duquel les filtres (2,3) sont reliés entre eux, **caractérisé en ce que** le filtre fin (2) est disposé de façon à recouvrir une surface du filtre support (3) et est inséré, avec un rebord coudé (2a), dans le cadre (3a) de telle sorte qu'une surface (4b) du filtre fin (2) soit aligné avec la surface adjacente (4a) du cadre (3a).

2. Filtre de percolation selon la revendication 1, **caractérisé en ce que** le filtre support (3) est constitué de matière plastique et le cadre (3a) est moulé sur le filtre support (3).

3. Filtre de percolation selon la revendication 2, **caractérisé en ce que** le filtre fin (2) est inséré dans le cadre (3a).

4. Filtre de percolation selon l'une des revendications 1 à 3, **caractérisé en ce que** le cadre a la forme d'un rebord étanche (3a) qui fait le tour.

5. Filtre de percolation selon l'une des revendications 1 à 4, **caractérisé en ce que** le filtre support (3) est constitué de PPS (sulfure de polyphénylène).

6. Filtre de percolation selon l'une des revendications 1 à 5, **caractérisé en ce que** le filtre support (3) est légèrement incurvé en direction du filtre fin (2).

7. Filtre de percolation selon l'une des revendications 1 à 6 **caractérisé en ce que** le filtre fin (2) est constitué de métal.

8. Procédé de fabrication d'un filtre de percolation (1) pour une machine à café, constitué d'un filtre fin (2), d'un filtre support (3) et d'un cadre (3a), dans lequel le filtre fin (2) est préfabriqué avec un rebord coudé (2a), placé dans un moule à injection de matière plastique, et le filtre support (3) est fabriqué avec le cadre (3a) en matière plastique et moulé par injection sur le filtre fin (2).
